# EUROPEAN PATENT SPECIFICATION

(11) **EP 2 729 941 B1**
(45) Date of publication and mention of the grant of the patent: **10.02.2016**
(21) Application number: 12810572.3
(22) Date of filing: 05.07.2012
(51) Int. Cl.: H01B 11/06, H01B 13/22

(54) **SHIELDING FOR CABLE COMPONENTS AND METHOD**
ABSCHIRMUNG FÜR KABELKOMPONENTEN UND VERFAHREN
BLINDAGE POUR COMPOSANTS DE CÂBLE ET PROCÉDÉ

(30) Priority: 08.07.2011 US 201161505772 P; 29.07.2011 US 201161513220 P
(43) Date of publication of application: 14.05.2014
(73) Proprietor: General Cable Technologies Corporation, Highland Heights, KY 41076 (US)
(72) Inventor: WEITZEL, Jared D., Cincinnati, Ohio 45233 (US); CAMP II, David P., Florence, Kentucky 41042 (US)
(74) Representative: Zacco Sweden AB
(86) International application number: PCT/US2012/045570
(87) International publication number: WO 2013/009570

(56) References cited:
- WO-A2-03/060957
- US-A- 5 952 615
- US-A- 6 117 485
- US-A1- 2010 096 179

## Description

### Related Application

This application claims the benefit of U.S. Provisional Application No. 61/505,772, filed July 8, 2011 and entitled Shielding for Cable Components, and U.S. provisional application no. 61/513,220, filed July 29, 2011, and entitled Method For Shielding A Substrate.

### Field of the Invention

The present invention provides a shielding for cable components that uses a conductive or semi-conductive coating to reduce or eliminate internal and external cable crosstalk as well as other EMI/RF from sources outside of the cable. The present invention also relates to a method for applying the shielding to a substrate, such as a cable component.

### Background of the Invention

A conventional communication cable typically includes a number of insulated conductors that are twisted together in pairs and surrounded by an outer jacket. Crosstalk or interference often occurs because of electromagnetic coupling between the twisted pairs within the cable or other components in the cable, thereby degrading the cable's electrical performance. Also, as networks become more complex and have a need for higher bandwidth cabling, reduction of cable-to-cable crosstalk (alien crosstalk) becomes increasingly important.

Shielding layers are often used to reduce crosstalk. Conventional shielding layers for communication cables typically include a continuous solid conductive material, such as aluminum or copper foil bonded to a plastic substrate. The substrate being provided for durability as the foil itself is not suitable for processing in a manufacturing environment. The shielding layer is wrapped around the cable's core of twisted wire pairs to isolate electromagnetic radiation from the core and also protect the core from outside interference. The conductive materials that can be used in this arrangement, however, are limited to those specific conductive foils that can be processed into a foil sheet. Other shielding applications rely on materials that highly absorb and dissipate interference. Shielding formed of such materials, however, is not advantageous in high performance communication cables, because the materials tend to attenuate the signal causing excessive power loss.

Typically in UTP (unshielded twisted pair) data communication cables, fillers made from dielectric materials are often used to provide physical separation between the pairs, effectively isolating their signals from one another. In UTP cables, the increased NEXT (near end crosstalk) performance required by 10 gigabit Ethernet applications necessitates the use of very large fillers, which in turn increases the size of the overall cable. In addition, the relatively large quantities of dielectric materials used in these large fillers often adversely affect the flame and smoke performance required to meet the plenum and riser ratings required for use in commercial installations.

Conventional STP (shielded twisted pair) and FTP (foil shielded twisted pairs) type cables often require shielding material to be placed around the individual pairs of conductors. Cable constructions of STP and FTP cables typically include pairs wrapped in foil tapes backed with polyester substrates to shield the pairs. These tapes are often rigid and do not effectively conform to the shape of the pair, thus adding extra radial dimension to the overall cable construction. The polyester backer or substrate material also adversely affects the flame and smoke performance required to meet the plenum and riser ratings needed for use in commercial installations.

Additionally, it is often advantageous to make the shield discontinuous to avoid the need for grounding. Conventional discontinuous shields, however, are difficult to manufacture and require application of separate segments onto a substrate or laser ablation to cut the shield foils to make the shield discontinuous.

US 2010/0096179 A1 discloses an example of a communication cable comprising a plurality of twisted wire pairs and an elongated shielding separator positioned between the twisted pairs. According to one embodiment, the separator comprises an inner non-conductive substrate and an outer conductive layer disposed about the substrate in selected regions to define sections with insulating portions therebetween.

A need exists for a shielding that can be easily applied to any cable component, such as a separator, that improves both electrical and flame/smoke performance, reduces the radial size of the cable, and increases flexibility of the cable. Moreover, a need exists for easily making the shielding discontinuous.

### Summary of the Invention

Accordingly, the present invention provides a shielded cable component and method that comprises a main body that has an outer surface and the main body is formed of a dielectric material and a coating that is applied to the outer surface of the main body where the coating includes a conductive or semi-conductive shielding material. An outer layer is disposed on the coating that completely encapsulates the coating and the main body and the outer layer is formed of a dielectric material. The coating forms a discontinuous layer on the outer surface of the main body. In one exemplary embodiment, the cable component is a crossweb separator.

The coating may for example include carbon nano fibers, graphene or graphite. In one exemplary embodiment, the coating is at least 10 % graphene. In another exemplary embodiment, the coating is made of graphene. According to yet another exemplary embodiment, the coating is formed of a substrate with conductive particles suspended in said substrate. Said conductive particles may for example be selected from the group consisting of aluminum, copper, iron oxides, silicone dioxide, nickel, zinc, silver, carbon nano fibers, graphene, or graphite.

The thickness of said outer layer may for example be at least two times larger than the thickness of said coating.

The main body and the outer layer may be formed of the same material or of different materials.

The present invention also provides a cable that comprises a plurality of wire pairs and a separator that is disposed between the pairs. The separator includes a main body that has an outer surface and the main body is formed of a dielectric material. A coating is applied to the outer surface of the main body. The coating includes a conductive or semi-conductive shielding material. An outer layer is disposed on the coating completely encapsulating the coating and the main body. The outer layer is formed of a dielectric material. The coating forms a discontinuous layer on said outer surface of said main body.

The present invention further provide a method for applying a shielding to a substrate the comprises the steps of providing a dielectric substrate in the form of a cable component that has a surface; coating the surface of the substrate with a conductive or semi-conductive shielding layer; and extruding a dielectric outer layer over the shielding layer such that the outer layer completely encapsulates the shielding layer and the substrate. The shielding layer may for example include one of aluminum, copper, iron oxides, nickel, zinc, silver, carbon nano fibers, graphene, or graphite. The step of coating the surface of the substrate may for example include one of spraying, wiping, electrostatic deposition, chemical deposition, and vacuum deposition. The substrate and the outer layer may for example be formed of the same material.

The present invention yet further provides a method for applying shielding to a substrate in the form of a cable component, the method comprising the steps of providing a substrate having a surface; applying at least one discrete amount of masking solution on the surface of the substrate; coating the surface of the substrate with a conductive or semi-conductive shielding layer such that the at least one discrete amount of masking solution is covered by at least one portion of the shielding layer; and removing the at least one discrete amount of masking solution and the at least one portion of the shielding layer from the substrate to create an electrically discontinuous shield on the surface of the substrate. The shielding layer may for example include one of aluminum, copper, iron oxides, nickel, zinc, silver, carbon nano fibers, graphene, or graphite. The masking solution may for example be a soluable ink. The step of coating the surface of the substrate may for example include one of spraying, wiping, electrostatic deposition, chemical deposition, and vacuum deposition.

According to one exemplary embodiment, the step of removing the at least one discrete amount of masking solution includes use of pressurized air or water. According to another exemplary embodiment, the step of removing the at least one discrete amount of masking solution includes dissolving the at least one discrete amount of masking solution. The step of dissolving may for example include applying an ink removal solution to the substrate. According to yet another exemplary embodiment, the step of removing includes washing away the discrete amount of masking solution.

The method above may further comprise the steps of applying more than one discrete amount of masking solution intermittingly on the surface of the substrate and removing the discrete amounts of masking solution and portions of the shielding layer covering the discrete amounts of masking solution. The step of removing the discrete amounts of masking solution and portions of the shielding layer may result in circumferential gaps in the discontinuous shield. The step of removing the discrete amounts of masking solution and portions of the shielding layer may additionally result in longitudinal gaps in the discontinuous shield.

The method above further comprises the step of extruding an outer layer over the shielding layer such that the outer layer completely encapsulates the shielding layer and the substrate.

The present invention may also provide a method for applying shielding to a cable component that comprises the steps of providing a dielectric cable component and the cable component has a surface; applying at least one discrete amount of masking solution on the surface of the cable component; coating the surface of the cable component with a conductive or semi-conductive shielding layer such that the at least one discrete amount of soluble solution is covered by at least one portion of the shielding layer; and removing the at least one discrete amount of masking solution and the at least one portion of the shielding layer to create an electrically discontinuous shield on the surface of the cable component. The method further includes the step of extruding a dielectric outer layer over the shielding layer such that the outer layer completely encapsulates the shielding layer and the cable component.

According to one exemplary embodiment of the method above, the cable component separates one or more pairs of conductors within the cable.

According to one exemplary embodiment of the method above, the step of removing the at least one discrete amount of masking solution includes use of pressurized air or water. According to another exemplary embodiment, the step of removing the at least one discrete amount of masking solution includes dissolving the at least one discrete amount of masking solution. The step of dissolving may for example include applying an ink removal solution to the substrate.

In the method above, the shielding layer may for example include one of aluminum, copper, iron oxides, nickel, zinc, silver, carbon nano fibers, graphene, or graphite.

In the method above, the cable component and the outer layer may for example be formed of the same dielectric material.

Other objects, advantages and salient features of the invention will become apparent from the following detailed description, which, taken in conjunction with the annexed drawings, discloses a preferred embodiment of the present invention.

### Brief Description of the Drawings

A more complete appreciation of the invention and many of the attendant advantages thereof will be readily obtained as the same becomes better understood by reference to the following detailed description when considered in connection with the accompanying drawings, wherein:
FIG. 1 is a cross-sectional view of a cable including a cable component with a shielding in accordance with an exemplary embodiment of the present invention;
FIG. 2 is a perspective view of a cable component according to a first step of the method of applying a shielding in accordance with an exemplary embodiment of the present invention;
FIG. 3 is a perspective view of a cable component according to a second step of the method of an exemplary embodiment of the present invention; and
FIG. 4 is a perspective view of a cable component according to a third step of the method of an exemplary embodiment of the present invention;
FIG. 5 is a perspective view of a cable component according to a fourth step of the method of an exemplary embodiment of the present invention;
FIG. 6 is a perspective view of a cable component according to a fifth step of the method of an exemplary embodiment of the present invention, showing the cable component with the shielding applied thereto;
FIG. 7 is a perspective view of a cable component similar to FIG. 6 with a shielding applied thereto according to a second embodiment of the present invention;
FIG. 8 is a perspective view of a cable component according to a third embodiment of the method of the present invention; and
FIG. 9 is a cross-sectional view of a cable including the cable component of FIG. 8.

### Detailed Description of Exemplary Embodiments

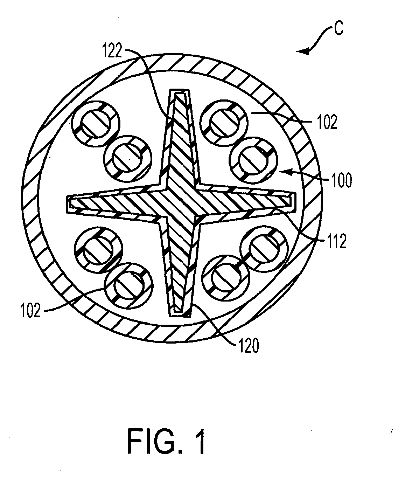

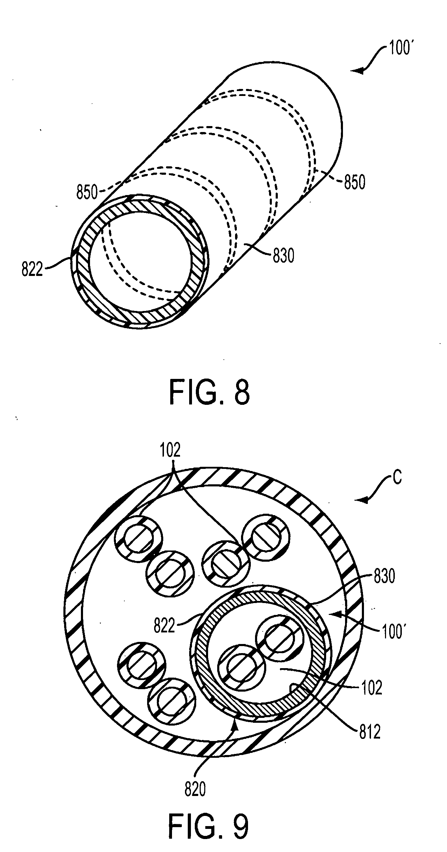

Referring to FIGS. 1-9, a cable component 100 of a cable C includes a shielding 120 according to an exemplary embodiment of the present invention. The cable component 100 may be a separator, for example, that isolates one or more pairs of insulated wires 102 in the core of the cable C. The separator may be a cross-web (FIG. 1) or a tube (FIG. 8), for example. By using shielding 120 with the component 100, the size of the component 100 may be reduced, thereby reducing the overall radial size of the cable C, and the flexibility of the cable C is increased. Moreover, the need for a shielding layer wrapped around the core of the cable is eliminated. The shielding 120 is also easily applied to the component 100 and improves both electrical and flame/smoke performance. The shielding 120 is preferably discontinuous to eliminate the need for grounding.

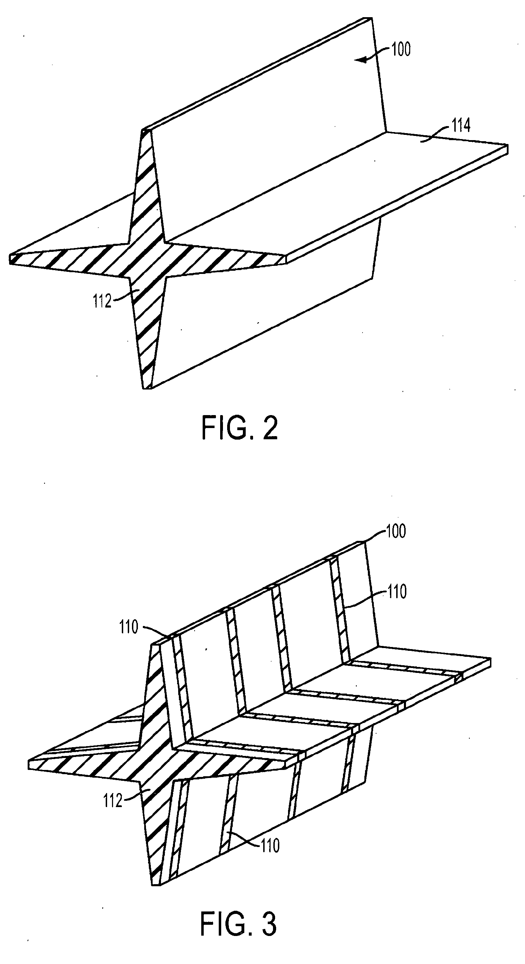

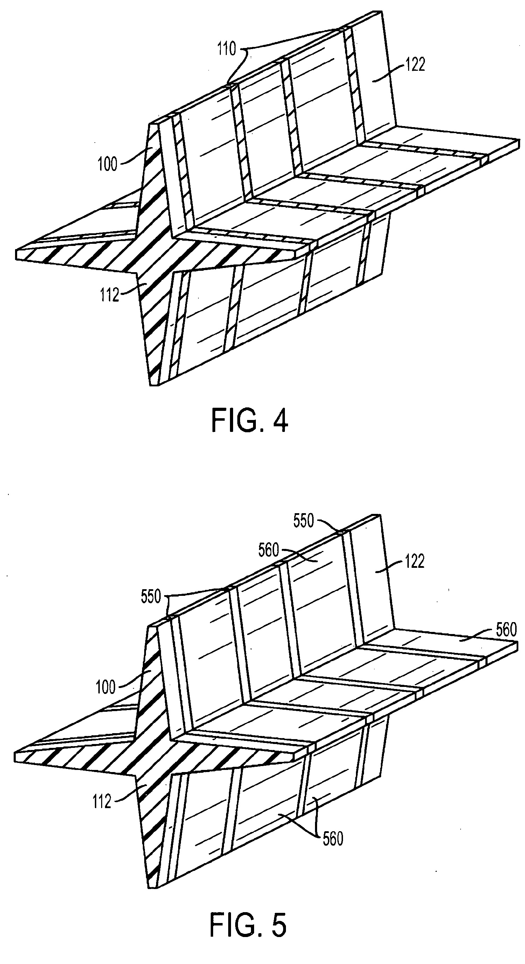

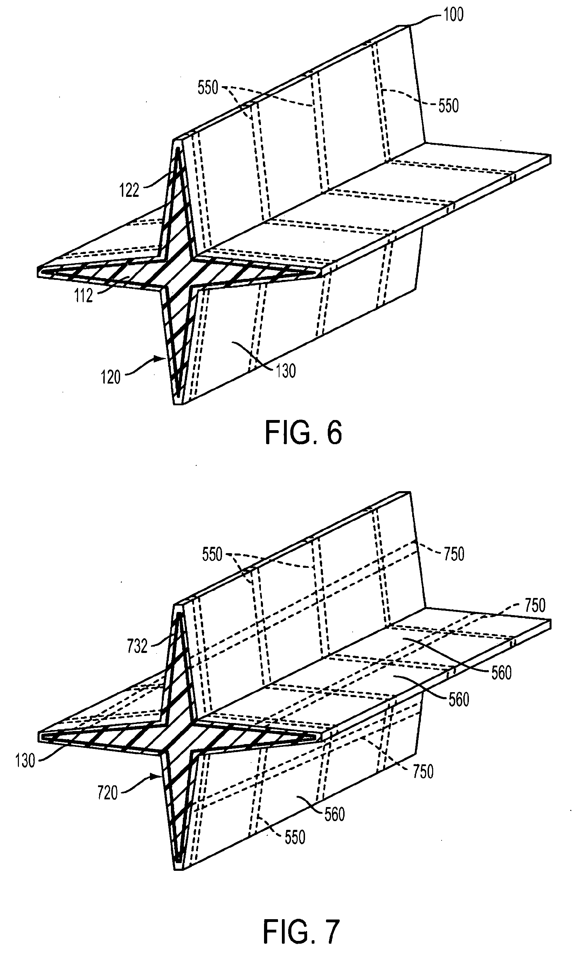

A method according to an exemplary embodiment of the present invention generally includes the steps of applying a coated shielding layer 122 to a substrate, such as cable component 100, and encapsulating or completely covering the same with an outer layer 130. The outer layer 130 completely encapsulates the cable component 100 and its shielding layer 122 such that there are not openings or gaps in the outer layer 130. More specifically, the method may include the steps of: extruding the substrate or cable component 100 (FIG. 2); applying discrete amounts of a masking solution 110 to the substrate (FIG. 3); coating the cable component 100 and masking solution 110 with a conductive shielding layer 122 (FIG. 4); removing the discrete amounts of masking solution 110 and the portions of the conductive shielding layer 122 in contact with the masking solution (FIG. 5); and extruding the outer layer 130 over the conductive shielding layer 122 to encapsulate the same (FIG. 6).

As seen in FIGS. 1 and 2, the substrate or cable component 100 preferably has a main body 112 with an outer surface 114. The main body 112 may be formed of any dielectric material like polyolefins, such as polypropylene or polyethylene, or a fluoropolymers, such as FEP, ECTFE, MFA, PFA and the like.

After extruding the cable component 100, discrete amounts of the masking solution 110 may be applied to the outer surface 114 of the component 100. The discrete amounts of masking solution 110 are preferably applied as spaced apart concentric circumferential bands around the outer surface 114 of the component 100, as seen in FIG. 3. In a preferred embodiment, the component 100 may have a substantially cross-web shape in cross-section and the bands of masking solution 110 conform to the shape of the component's outer surface 114. The masking solution 110 is preferably a solution that is brittle when dried or poorly adheres to the outer surface 114 and therefore is easily removed, such as water based inks for cable band marking, pigment based coatings, UV curable coatings, temporary adhesives and/or a soluble solution, such as masking ink, for example, that is water soluable.

After application of the discrete amounts of masking solution 110, the component outer surface 114 and the bands of masking solution 110 may be coated with the conductive shielding layer 122 of the shielding 120, as seen in FIG. 4. The bands of masking solution 110 prevent the coated shielding layer 122 from adhering to the outer surface 114 of the component 100 where the masking solution has been applied. The coating layer 122 may be applied to the outer surface 114 in any known matter, such as by spraying, wiping, electrostatic deposition, chemical deposition, vacuum deposition, and the like. The coated shielding layer 122 is preferably formed of a conductive material, such as graphene or graphite. The coated shielding layer 122 may also be formed of a semi-conductive material.

Alternatively, the shielding layer 120 may be formed by conductive particles suspended in a non-conductive substrate, as disclosed in commonly owned currently pending U.S. Application Serial No. 13/246,183, filed September 27, 2011 and entitled Shielding for Communication Cables Using Conductive Particles, and commonly owned currently pending U.S. Application Serial No. 13/045,000, filed March 10, 2011 and entitled Cable Having Insulation With Micro Oxide Particles. For example, the conductive particles may be selected from aluminum, copper, iron oxides, silicone dioxide, nickel, zinc, silver, carbon nano fibers, graphene, or graphite, and the substrate may be an ink or adhesive.

To make the coated shielding layer 122 discontinuous, the circumferential bands of the masking solution 110 are removed, thereby taking with it any residual shielding layer 122 or portions of the shielding layer 120 covering the circumferential bands of the masking solution, as seen in FIG. 5. The bands of masking solution 110 and the shielding layer portions covering those bands may be removed in several ways, such as by using pressurized air or water to flake off or wash off the masking solution 110 and residual shielding layer 122. Alternatively, a solution may be used to dissolve the bands of masking solution 110, such that the portions of the shielding layer 122 covering the bands can be removed. By removing the masking solution 110 and consequently the conductive material adhered to the masking solution, gaps 550 shaped as spaced circumferential bands in the coated shielding layer 122 are created, thereby defining discrete segments 560 of the shielding layer 122, as seen in FIG. 5. The discrete segments 560 create an electrically discontinuous shield along the length of the cable component 100.

It is preferable that the segments 560 be sized relative to the lay length of the individual pairs 102 and lay length of the cable's core. This is due to the fact that the segments 560 act as antennas that retransmit electromagnetic energy. Also the gaps 550 are preferably sized to effectively block the range of frequencies most likely to impinge on the shielding 120 to accommodate any cable component design. These gaps 550 in the coating 122 provide another method to tune the shielding characteristics to the specific cable design by spacing them at intervals to avoid interference with the pair and or cable lay lengths. Although it is preferable that the shielding 120 be made discontinuous, the shielding 120 may be made continuous by eliminating the steps of applying and removing the masking solution 110 before applying the coating 122.

To protect the coated shielding layer 122, the outer layer 130 is extruded over the coated shielding layer 122, as seen in FIG. 6, such that the outer layer 130 encapsulates the layer 122 by completely covering the layer 122. Thus, the shielding 120 of the component 100 includes inner and outer layers, the inner coated shielding layer 122 and the outer layer 130. The outer layer 130 is preferably thicker than the shielding layer 122. For example, the shielding layer 122 may have a thickness of less than about 0.00254 cm (0.001 inches) and the outer layer 130 may have a thickness of about 0.00762 - 0.0127 cm (0.003 - 0.005 inches). The outer layer 130 preferably has a thickness that is at least twice that of the shielding layer 122 and more preferably a thickness that is three times larger than the shielding layer thickness. The outer layer 130 is preferably formed of the same material as the main body 112 but may be formed of a different material. For example, the outer layer 130 may be formed of a dielectric material such as olefins, such as polypropylene or polyethylene, or fluoro-polymers, such as FEP, ECTFE, MFA, PFA, and the like.

FIG. 7 illustrates an alternative embodiment of a shielding 720 for the cable component 100. The shielding 720 is the same as the shielding 120 of the first embodiment, except that longitudinal gaps 750 are provided in the coated shielding layer 722 alone or in addition to the circumferential or radial gaps 550. The addition of circumferential or radial gaps allows another degree of shield tuning and isolation between cable components. The method of applying the shielding 720 is the same as the first embodiment with the additional step of adding masking solution to create the longitudinal gaps 750. More specifically, the method may include the steps of: extruding the cable component 100; applying discrete amounts of a masking solution to the cable component in longitudinal strips or both circumferential bands and longitudinal strips; coating the cable component 100 and masking solution with the conductive shielding layer 722; removing the discrete amounts of masking solution and the portions of the conductive shielding layer 722 in contact with the masking solution to create the gaps 550 and 750 in the shielding, thereby increasing the number of segments 560 in the shielding; and extruding the outer layer 130 over the conductive shielding layer 122 to encapsulate the same.

FIGS. 8 and 9 illustrate a cable component of the present invention as a tube 100' in accordance with a third embodiment instead of a cross-web separator of the first and second embodiment. The tube 100' preferably encloses at least one of the pairs 102 in the cable core, as seen in FIG. 9. The tube 100' includes shielding 820 that is applied using the same steps described above with respect to the first and second embodiments. The main body 812 of the tube 100' is first extruded, similar to the step shown in FIG. 2 and discrete amounts of a masking solution are then applied to the tube's main body 812, similar to the step shown in FIG. 3. The tube 100' is then coated with a conductive shielding layer 822, similar to the step shown in FIG. 4 and the discrete amounts of masking solution are then removed along with portions of the conductive shielding layer 122 in contact with the masking solution, to create circumferential gaps 850 in the shielding, similar to the step shown in FIG. 5. Finally, an outer layer 830 is extruded over the conductive shielding layer 822, similar to the step shown in FIG. 6.

While particular embodiments have been chosen to illustrate the invention, it will be understood by those skilled in the art that various changes and modifications can be made therein without departing from the scope of the invention as defined in the appended claims. For example, the separators of the above exemplary embodiments may have any cross-sectional shape, and is not limited to a crossweb or tube. Moreover, the shielding of the exemplary embodiments may be applied to any component of a cable and not just the separator.

## Claims

1. A shielded cable component (100, 100'), comprising:
a main body (112, 812) having an outer surface (114), said main body being formed of a dielectric material;
a coating (122, 722, 822) applied to said outer surface of said main body, said coating including a conductive or semi-conductive shielding material; and
an outer layer (130, 830) disposed on said coating completely encapsulating said coating and said main body, said outer layer being formed of a dielectric material, wherein said coating forms a discontinuous layer on said outer surface of said main body.

2. A shielding cable component according to claim 1, wherein
said discontinuous layer includes circumferential gaps (550, 850) in said coating that extend around said main body.

3. A shielding cable component according to claim 2, wherein
said discontinuous layer includes longitudinal gaps (750) in said coating that extend longitudinally with respect to the length said main body.

4. A shielding cable component according to claim 1, wherein
said coating is formed of a substrate with conductive particles suspended in said substrate.

5. A cable (C), comprising:
a plurality of wire pairs (102); and
a separator disposed between said pairs, said separator being a shielding cable component (100, 100') according to any of claims 1 to 4.

6. A method for applying a shielding (120, 720, 820) to a cable component, the method comprising the steps of:
providing a dielectric cable component (100, 100') having a surface (114);
applying at least one discrete amount of masking solution (110) on the surface (114) of the cable component;
coating the surface of the cable component with a conductive or semi-conductive shielding layer (122, 722, 822) such that the at least one discrete amount of masking solution is covered by at least one portion of the shielding layer;
removing the at least one discrete amount of masking solution (110) and the at least one portion of the shielding layer to create an electrically discontinuous shield on the surface of the cable component; and
extruding a dielectric outer layer (130, 830) over the shielding layer such that the outer layer completely encapsulates the shielding layer and the cable component.

7. A method according to claim 6, wherein
the at least one discrete amount of masking solution (110) is applied as a circumferential band around the cable component.

8. A method according to claim 7, wherein
the at least one discrete amount of masking solution (110) is applied as a longitudinal strip along the length of the cable component.

9. A method according to claim 6, wherein
the step of removing the at least one discrete amount of masking solution includes use of pressurized air or water.

10. A method according to claim 6, wherein
the step of removing the at least one discrete amount of masking solution includes dissolving the at least one discrete amount of masking solution.

11. A method according to claim 6, further comprising the steps of
applying more than one discrete amount of masking solution (110) intermittingly on the surface (114) of the cable component; and
removing the discrete amounts of masking solution and portions of the shielding layer covering the discrete amounts of masking solution.

12. A method according to claim 11, wherein
each discrete amount of masking solution is applied as a circumferential band around the cable component.

13. A method according to claim 12, wherein
each discrete amount of masking solution is applied as a longitudinal strip along the length of the cable component.

14. A method according to claim 6, wherein
the step of coating the surface (114) of the cable component includes one of spraying, wiping, electrostatic deposition, chemical deposition, and vacuum deposition.

15. A method according to claim 6, wherein
the masking solution is a soluble ink.

## Patentansprüche

1. Abgeschirmte Kabelkomponente (100, 100'), umfassend:
einen Hauptkörper (112, 812) mit einer Außenfläche (114), welcher aus einem dielektrischen Material gebildet ist;
eine auf die Außenfläche des Hauptkörpers aufgetragene Beschichtung (122, 722, 822), welche ein leitendes oder halbleitendes Abschirmungsmaterial umfasst; und
eine Außenschicht (130, 830), welche auf die Beschichtung aufgebracht ist und die Beschichtung und den Hauptkörper völlig verkapselt, wobei die Außenschicht aus einem dielektrischen Material gebildet ist, wobei die Beschichtung eine diskontinuierliche Schicht auf der Außenfläche des Hauptkörpers bildet.

2. Abschirmungskabelkomponente nach Anspruch 1, wobei die diskontinuierliche Schicht umfängliche Spalte (550, 850) in der Beschichtung umfasst, die sich um den Hauptkörper herum erstrecken.

3. Abschirmungskabelkomponente nach Anspruch 2, wobei die diskontinuierliche Schicht längliche Spalte (750) in der Beschichtung umfasst, die sich relativ zur Länge des Hauptkörpers erstrecken.

4. Abschirmungskabelkomponente nach Anspruch 1, wobei die Beschichtung aus einem Substrat mit in dem Substrat suspendierten Partikeln gebildet ist.

5. Kabel (C), umfassend:
eine Mehrzahl von Drahtpaaren (102); und
einen zwischen den Paaren angeordneten Separator, welcher eine Abschirmungskabelkomponente (100, 100') nach einem der Ansprüche 1 bis 4 ist.

6. Verfahren zum Auftragen einer Abschirmung (120, 720, 820) auf eine Kabelkomponente, welches Verfahren die folgenden Schritte umfasst:
Bereitstellen einer dielektrischen Kabelkomponente (100, 100') mit einer Oberfläche (114);
Auftragen von zumindest einer diskreten Menge einer Maskierungslösung (110) auf die Oberfläche (114) der Kabelkomponente;
Beschichten der Oberfläche der Kabelkomponente mit einer leitenden oder halbleitenden Abschirmungsschicht (122, 722, 822) derart, dass die zumindest eine diskrete Menge von Maskierungslösung durch zumindest einen Teil der Abschirmungsschicht überdeckt ist;
Entfernen der zumindest einen diskreten Menge von Maskierungslösung (110) und des zumindest einen Teils der Abschirmungsschicht zur Bildung einer elektrisch diskontinuierlichen Abschirmung auf der Oberfläche der Kabelkomponente; und
Extrudieren einer dielektrischen Außenschicht (130, 830) über die Abschirmungsschicht derart, dass die Außenschicht die Abschirmungsschicht und die Kabelkomponente völlig verkapselt.

7. Verfahren nach Anspruch 6, wobei die zumindest eine diskrete Menge von Maskierungslösung (110) als ein umfängliches Band um die Kabelkomponente herum aufgetragen wird.

8. Verfahren nach Anspruch 7, wobei die zumindest eine diskrete Menge von Maskierungslösung (110) als ein länglicher Streifen um die Länge der Kabelkomponente herum aufgetragen wird.

9. Verfahren nach Anspruch 6, wobei der Schritt des Entfernens der zumindest einen diskreten Menge von Maskierungslösung die Verwendung von unter Druck gesetzter Luft oder unter Druck gesetztem Wasser umfasst.

10. Verfahren nach Anspruch 6, wobei der Schritt des Entfernens der zumindest einen diskreten Menge von Maskierungslösung das Auflösen der zumindest einen diskreten Menge von Maskierungslösung umfasst.

11. Verfahren nach Anspruch 6, zusätzlich umfassend die Schritte:
nachlassendes Auftragen von mehr als einer diskreten Menge von Maskierungslösung (110) auf die Oberfläche (114) der Kabelkomponente; und
Entfernen der diskreten Mengen von Maskierungslösung und der Teile der Abschirmungsschicht, die die diskreten Mengen von Maskierungslösung überdecken.

12. Verfahren nach Anspruch 11, wobei jede diskrete Menge von Maskierungslösung als ein umfängliches Band um die Kabelkomponente herum aufgetragen wird.

13. Verfahren nach Anspruch 12, wobei jede diskrete Menge von Maskierungslösung als ein länglicher Streifen um die Länge der Kabelkomponente herum aufgetragen wird.

14. Verfahren nach Anspruch 6, wobei der Schritt des Beschichtens (114) der Kabelkomponente eines der folgenden umfasst: Sprühen, Wischen, elektrostatische Ablagerung, chemische Ablagerung und Vakuumablagerung.

15. Verfahren nach Anspruch 6, wobei die Maskierungslösung eine lösliche Tinte ist.

## Revendications

1. Composant de câble blindé (100, 100'), comprenant :
un corps principal (112, 812) ayant une surface externe (114), ledit corps principal étant formé d'un matériau diélectrique ;
un revêtement (122, 722, 822) appliqué à ladite surface externe dudit corps principal, ledit revêtement comprenant un matériau de blindage conducteur ou semi-conducteur ; et
une couche externe (130, 830) disposée sur ledit revêtement enfermant complètement ledit revêtement et ledit corps principal, ladite couche externe étant formée d'un matériau diélectrique, dans lequel ledit revêtement forme une couche discontinue sur ladite surface externe dudit corps principal.

2. Composant de câble blindé selon la revendication 1, dans lequel ladite couche discontinue comprend des espaces circonférentiels (550, 850) dans ledit revêtement qui s'étendent autour dudit corps principal.

3. Composant de câble blindé selon la revendication 2, dans lequel ladite couche discontinue comprend des espaces longitudinaux (750) dans ledit revêtement qui s'étendent longitudinalement par rapport à la longueur dudit corps principal.

4. Composant de câble blindé selon la revendication 1, dans lequel ledit revêtement est formé d'un substrat avec des particules conductrices en suspension dans ledit substrat.

5. Câble (C), comprenant :
une pluralité de paires de fils (102) ; et
un séparateur placé entre lesdites paires, ledit séparateur étant un composant de câble de blindage (100, 100') selon l'une quelconque des revendications 1 à 4.

6. Procédé d'application d'un blindage (120, 720, 820) à un composant
de câble, le procédé comprenant les étapes consistant à :
utiliser un composant de câble diélectrique (100, 100') ayant une surface (114) ;
appliquer au moins une quantité discrète de solution de masquage (110) sur la surface (114) du composant de câble ;
revêtir la surface du composant de câble avec une couche de blindage conductrice ou semi-conductrice (122, 722, 822) de sorte que l'au moins une quantité discrète de solution de masquage est couverte par au moins une partie de la couche de blindage ;
éliminer l'au moins une quantité discrète de solution de masquage (110) et l'au moins une partie de la couche de blindage pour créer un blindage électriquement discontinu sur la surface du composant de câble ; et
extruder une couche extérieure diélectrique (130, 830) sur la couche de blindage de sorte que la couche extérieure enferme complètement la couche de blindage et le composant de câble.

7. Procédé selon la revendication 6, dans lequel
l'au moins une quantité discrète de solution de masquage (110) est appliquée sous forme d'une bande circonférentielle autour du composant de câble.

8. Procédé selon la revendication 7, dans lequel
l'au moins une quantité discrète de solution de masquage (110) est appliquée sous forme d'une bande longitudinale autour du composant de câble.

9. Procédé selon la revendication 6, dans lequel
l'étape d'élimination de l'au moins une quantité discrète de solution de masquage comprend l'utilisation d'air comprimé ou d'eau.

10. Procédé selon la revendication 6, dans lequel
l'étape d'élimination de l'au moins une quantité discrète de solution de masquage comprend la dissolution de l'au moins une quantité discrète de solution de masquage.

11. Procédé selon la revendication 6, comprenant également les étapes consistant à
appliquer plus d'une quantité discrète de solution de masquage (110) de façon intermittente sur la surface (114) du composant de câble ; et
éliminer les quantités discrètes de solution de masquage et les parties de la couche de blindage couvrant les quantités discrètes de solution de masquage.

12. Procédé selon la revendication 11, dans lequel
chaque quantité discrète de solution de masquage est appliquée sous forme d'une bande circonférentielle autour du composant de câble.

13. Procédé selon la revendication 12, dans lequel
chaque quantité discrète de solution de masquage est appliquée sous forme d'une bande longitudinale le long de la longueur du composant de câble.

14. Procédé selon la revendication 6, dans lequel
l'étape de revêtement de la surface (114) du composant de câble comprend une opération parmi la pulvérisation, l'essuyage, le dépôt électrostatique, le dépôt chimique et le dépôt sous vide.

15. Procédé selon la revendication 6, dans lequel
la solution de masquage est une encre soluble.
